Europäisches Patentamt

European Patent Office

Office européen des brevets

(11) Veröffentlichungsnummer: **0 363 780**

**A1**

# (12) EUROPÄISCHE PATENTANMELDUNG

(21) Anmeldenummer: 89118242.0

(22) Anmeldetag: 02.10.89

(51) Int. Cl.5: **B60B 21/02 , A61G 5/10**

(30) Priorität: 12.10.88 DE 3834696

(43) Veröffentlichungstag der Anmeldung:
18.04.90 Patentblatt 90/16

(84) Benannte Vertragsstaaten:
AT BE CH DE ES FR GB GR IT LI LU NL SE

(71) Anmelder: Waldemar Heinemann GmbH & Co.
KG
Krombacher Strasse 41
D-5910 Kreuztal 1(DE)

(72) Erfinder: Heinemann, Michael, Dipl.-Ing.
Schneeweissdornstrasse 5
D-5910 Kreuztal(DE)

(74) Vertreter: Missling, Arne, Dipl.-Ing.
Patentanwalt Bismarckstrasse 43
D-6300 Giessen(DE)

(54) **Rad für einen Rollstuhl.**

(57) Die Erfindung bezieht sich auf ein Rad für einen Rollstuhl. Bei bekannten Rädern erwies es sich als nachteilig, daß der Handlauf nicht in ausreichender Weise von der Bedienungs person ergriffen werden konnte. Erfindungsgemäß ist deshalb vorgesehen, einen Handlauf 3 einstückig mit einer Felge 2 auszubilden und in einer günstigen Weiterbildung der Erfindung ergonomisch der greifenden menschlichen Hand anzupassen.

Fig. 1

EP 0 363 780 A1

## Rad für einen Rollstuhl

Die Erfindung betrifft ein Rad für einen Rollstuhl mit einer mit einem Reifen versehenen Felge und einem Handlauf.

Bei Rollstühlen ist es erforderlich, an den Rädern jeweils einen Handlauf vorzusehen, damit der Benutzer des Rollstuhles diesen in Fahrt setzen und steuern kann. Ohne einen Handlauf ergibt sich der Nachteil, daß der Benutzer stets den Reifen ergreifen muß, was zum einen unbequem ist und zum anderen dazu führt, daß stets die Hände des Benutzers verschmutzt sind.

Es ist deshalb bekannt, einen ringförmigen Handlauf an dem Rad anzuordnen, wobei der Handlauf mittels Distanzstücken im Bereich der Felge des Rades angeordnet ist. Diese Art der Befestigung erweist sich als ungünstig, da der Benutzer des Rollstuhles den Handlauf nicht ständig mit der Hand halten kann, da sonst seine Finger von den Distanzstücken geklemmt oder gequetscht würden. Weiterhin erweist es sich als nachteilig, daß die auf einen derartigen Handlauf übertragbaren Kräfte nicht kontinuierlich aufgebracht werden können.

Insbesondere Benutzer, welche nur mehr geringe Körperkräfte zur Verfügung haben, können mit den bekannten Rollstühlen nicht in ausreichender Weise fahren und diese insbesondere nicht ausreichend lenken oder abbremsen.

Ein weiterer Nachteil bekannter Rollstühle liegt darin, daß insbesondere stark gelähmte Personen nur über eine beschränkte Bewegbarkeit der Arme verfügen, sodaß sie erhebliche Probleme haben, den bekannten Handlauf überhaupt zu greifen bzw., bedingt durch die Distanzstücke, in stetigem Wechsel zu greifen und nachfolgend loszulassen.

Der Erfindung liegt die Aufgabe zugrunde, ein Rad für einen Rollstuhl zu schaffen, welches so ausgebildet ist, daß auch Benutzer mit sehr geringen Kräften in sicherer und zuverlässiger Weise das Rad in Drehung versetzen bzw. abbremsen zu können.

Erfindungsgemäß wird die Aufgabe dadurch gelöst, daß der Hand lauf ringförmig ausgestaltet und einstückig mit der Felge ausgebildet ist.

Das erfindungsgemäße Rad zeichnet sich durch eine Reihe erheblicher Vorteile aus. Durch die ringförmige Ausgestaltung des Handlaufes wird die Möglichkeit geschaffen, daß die Bedienungsperson diesen stets in der Hand halten kann, d.h. ihre Hände nicht ständig bewegen muß. Dies erweist sich besonders dann als vorteilhaft, wenn der Benutzer nur mehr über schwache körperliche Kräfte verfügt oder in seiner Beweglichkeit stark eingeschränkt ist. Durch die einstückige Ausgestaltung des Handlaufes mit der Felge kann auf Distanz stücke oder Zwischenstücke verzichtet werden, wodurch insgesamt die Sicherheit erheblich gesteigert werden kann, da nicht der Gefahr besteht, daß der Benutzer mit seinen Fingern in den Bereich zwischen, der Felge und dem Handlauf hängenbleibt und sich verletzt.

Ein weiterer Vorteil ist dadurch gegeben, daß stark behinderte Personen ihre Hand stets auf dem Handlauf belassen können und nicht mehr gezwungen sind, den Reifen selbst zu Greifen, so wie dies beim Stand der Technik üblich war und den Nachteil mit sich brachte, daß die Bedienungsperson stets beschmutzte Hände hatte.

In einer günstigen Ausgestaltung der Erfindung ist der Handlauf über einen im wesentlichen zylindrischen Verbindungsring mit einem Seitenbereich der Felge verbunden. Es ist bei dieser Ausgestaltungsform möglich, die Felge und den Handlauf so auszubilden, daß der restliche Bereich des Rades in konventioneller Weise ausgestaltet sein kann, beispielsweise auch unter Verwendung üblicher Fahrradspeichen. Da der Handlauf seitlich der Felge vorgesehen ist, ist es möglich, einen ausreichenden Abstand zwischen dem Handlauf und der Felge vorzusehen, um eine Beeinflußung der Hand des Benutzers durch den Reifen auszuschließen.

Der Handlauf kann in einer weiteren, besonders vorteilhaften Ausgestaltung der Erfindung einen ergonomischen, der greifenden menschlichen Hand angepaßten Querschnitt aufweisen. Durch diese Querschnittsform ist es insbesondere möglich, die Handkräfte eines Benutzers besonders wirkungsvoll und effizient auszunutzen, wobei es sich als günstig erweist, daß der Handlauf, bedingt durch den ergonomischen Querschnitt, praktisch am gesamten Bereich der Handinnenfläche des Benutzers anliegt. Durch diese Maßnahme wird auch der Reibungskoeffizient erhöht, sodaß ein Rutschen des Handlaufes relativ zur Hand verhindert wird. Ein weiterer Vorteil des ergonomischen Querschnitts des Handlaufes ist dadurch gegeben, daß dieser auch von den Fingern des Benutzers in besonders guter Weise gegriffen werden kann, sodaß auch die durch die Finger aufzubringenden Druckkräfte zum Antrieb des Rades ausgenutzt werden können.

Durch die oben beschriebene Ausgestaltung des Handlaufes und der Felge ergibt sich ein weiterer positiver Aspekt, da die Stabilität der Felge durch den einstückig mit diesem ausgebildeten Hand lauf und/oder den Verbindungsring erheblich erhöht wird. Es ist somit möglich, die Verbindung zwischen der Felge und der Nabe des Rades kleiner zu dimensionieren, beispielsweise durch Verwendung weniger Speichen, um somit eine erhebliche Gewichtseinsparung zu erzielen.

Eine weitere vorteilhafte Ausgestaltung des erfindungsgemäßen Rades ist dadurch gegeben, daß die Felge und der Handlauf über einen scheibenförmigen, mit einer Nabe verbundenen Radkörper mit der Nabe verbunden sind. Der scheibenförmige Radkörper führt zu einer erheblichen Verringerung des Verletzungsrisikos, da die bei Speichenrädern gegebene Gefahr, daß der Benutzer oder andere Personen in die Speichen greifen, völlig ausgeschlossen ist. Weiterhin führt die Verwendung eines Radkörpers zu einer erheblichen Kostenreduzierung, da dieser in einfacher und günstiger Weise herstellbar ist. Zusätzlich ist es möglich, gestalterische oder optische Möglichkeiten zu schaffen, die mit einem Speichenrad nicht zu realisieren sind.

Eine Weiterentwicklung des erfindungsgemäßen Rades sieht weiterhin vor, daß der Radkörper an seinem der Nabe zugewandten Bereich zur mit dem Handlauf versehenen Seite des Rades ausgewölbt ist. Diese Auswölbung bringt den Vorteil, daß zum einen die Stabilität des Radkörpers im Vergleich zu einer flachen Scheibe wesentlich gesteigert werden kann und daß zum anderen der so geschaffene Innenraum des Rades beim Zusammenlegen des Rollstuhles besonders vorteilhaft genutzt werden kann.

Der Radkörper kann entweder aus Metall, beispielsweise Stahl oder Aluminium gefertigt sein, es ist jedoch auch möglich, diesen aus einem Faserwerkstoff herzustellen. Durch die letztgenannte Möglichkeit ergeben sich insbesondere erhebliche Gewichtseinsparungen.

In einer günstigen Ausgestaltung der Erfindung kann die Felge an ihrer radialen Innenseite mit einer Bremsfläche versehen sein. Im Vergleich zu einer üblichen Bremse gestattet die Verwendung der radialen Innenseite eine luftdruckunabhängige Bremswirkung. Weiterhin ist es möglich, die gesamte Bremseinrichtung an einer optisch kaum einsehbaren Stelle des Rollstuhles anzuordnen, sodaß dessen Design wesentlich verbessert werden kann.

Im folgenden wird die Erfindung anhand eines Ausführungsbeispieles in Verbindung mit der Zeichnung beschrieben. Dabei zeigt:

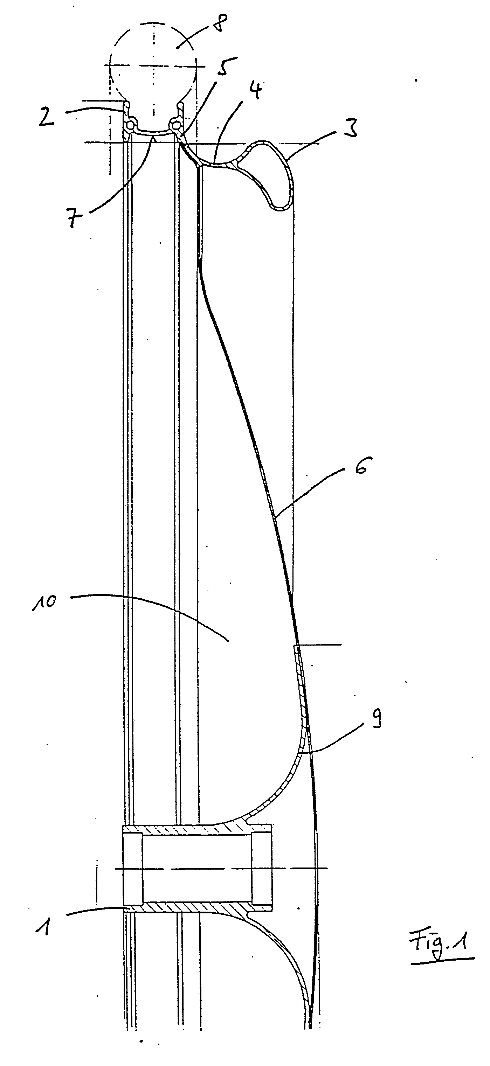

Fig. 1 eine Teil-Schnittansicht eines Ausführungsbeispieles eines erfindungsgemäßen Rades für einen Rollstuhl.

Das erfindungsgemäße Rad ist in üblicher Weise mit einem Reifen 8 zu versehen, welcher in Fig. 1 nur in schematischer Weise dargestellt ist und welcher in bekannter Weise ausgestaltet sein kann. Der Reifen 8 sitzt auf einer Felge 2, deren Flankenausgestaltung ebenfalls in üblicher Weise den Anforderungen insbesondere der Art und Größe des Reifens anzupaßen ist. Der Reifen 8 kann als Vollgummireifen ausgeführt sein, es ist auch möglich, diesen mit einem Schlauch zu versehen.

Weiterhin weist das erfindungsgemäße Rad eine Nabe 1 auf, die ebenfalls in üblicher Weise ausgebildet und mittels einer nicht gezeigten Lagerung an einem Rahmen eines Rollstuhles gelagert ist.

Die Felge 2 ist an dem dem Rollstuhl abgewandten Seitenbereich 5 einstückig mit einem Handlauf 3 verbunden, wobei die Verbindung der Felge 2 mit dem Handlauf 3 über einen Verbindungsring 4 erfolgt.

Der Handlauf 3 ist ringförmig ausgebildet und weist einen Querschnitt auf, welcher ergonomisch einer greifenden menschlichen Hand angepaßt ist. Da der Handlauf 3 an der dem Rollstuhl abgewandten Seite des Rades vorgesehen ist, greift die Hand des Benutzers in den Handlauf, bezogen auf die Darstellung gemäß Fig. 1, von oben und von rechts. Der Handlauf 3 ist so ausgestaltet, daß die gesamte Handfläche des Benutzers sich in Anlage mit dem Handlauf befindet, wobei insbesonders die radiale Innenseite des Handlaufes 3 so ausgestaltet ist, daß auch die Finger des Benutzers in vollständiger Anlage mit dem Handlauf 3 bringbar sind. Da die Felge 2 und der Handlauf 3 einstückig miteinander ausgebildet sind und da der Verbindungsring 4 einen seitlichen Abstand zwischen der Felge 2 und dem Handlauf 3 ermöglicht, kann die Hand des Benutzers stets an dem Handlauf 3 bleiben, es ist nicht erforderlich, diese ständig zu lösen bzw. den Handlauf Wieder zu greifen, so wie dies beim Stand der Technik erforderlich ist.

Die Felge 2 und der Handlauf 3 sind mit der Nabe 1 über einen Radkörper 6 verbunden, welcher im wesentlichen scheibenförmig ausgebildet ist. Der Radkörper 6 weist einen im wesentlichen gleichbleibenden Querschnitt auf und kann beispielsweise durch einen Tiefzieh- oder Fließdrück-Vorgang aus einer Blechtafel hergestellt werden. Der Radkörper 6 ist an der mit dem Handlauf 3 versehenen Seite des Rades in seinem zentrischen Bereich konvex ausgebogen und bildet somit im Zentrum des Rades einen Innenraum 10, welcher beim Zusammenlegen des Rollstuhles genutzt werden kann, um die zusammengelegte Breite des Rollstuhles durch Einbringung von weiteren Rollstuhl-Bauteilen zu verringern.

Der Radkörper 6 ist an seinem Umfangsrand in dem Übergangsbereich zwischen der Felge 2 und dem Verbindungsring 4 mit der Felge bzw. mit dem Verbindungsring verbunden.

An der Nabe 1 ist ein ringförmiger Flansch 9 ausgebildet, an welchem der Radkörper 6 befestigt ist. Der Flansch 9 ist bevorzugterweise einstückig mit der Habe 1 ausgeformt, beispielsweise in Form eines Gußstückes.

Die Erfindung ist nicht auf das gezeigte Ausführungsbeispiel beschränkt, es ergeben sich insbesonders hinsichtlich der ergonomischen Ausgestaltung des Handlaufes vielfältige Abwandlungsmöglichkeiten und Modifikationen. So ist es beispielsweise möglich, je nach dem Grad der Behinderung des Benutzers bzw. nach dessen Bewegungsmöglichkeiten die Ausrichtung und Ausgestaltung des Handlaufes anzupaßen.

**Ansprüche**

1. Rad für einen Rollstuhl mit einer mit einem Reifen versehenen Felge und einem Handlauf, dadurch **gekennzeichnet**, daß der Handlauf (3) ringförmig ausgestaltet und einstückig mit der Felge (2) ausgebildet ist.

2. Rad nach Anspruch 1, dadurch **gekennzeichnet**, daß der Handlauf (3) über einen im wesentlichen zylindrischen Verbindungsring (4) mit einem Seitenbereich (5) der Felge (2) verbunden ist.

3. Rad nach Anspruch 1 oder 2, dadurch **gekennzeichnet**, daß der Handlauf (3) einen ergonomischen, der greifenden menschlichen Hand angepaßten Querschnitt aufweist.

4. Rad nach einem der Ansprüche 1 bis 3 dadurch **gekennzeichnet**, daß die Felge (2) und der Handlauf (3) über einen scheibenförmigen, mit einer Nabe (1) verbundenen Radkörper (6) mit der Nabe (1) verbunden sind.

5. Rad nach Anspruch 4, dadurch **gekennzeichnet**, daß der Radkörper (6) in seinem der Habe (1) zugewandten Bereich zur mit dem Handlauf (3) versehe nen Seite des Rades ausgewölbt ist.

6. Rad nach Anspruch 4 oder 5, dadurch **gekennzeichnet**, daß der Radkörper (6) aus Metall oder einem Kohlefaserwerkstoff gefertigt ist.

7. Rad nach einem der Ansprüche 1 bis 6, dadurch **gekennzeichnet**, daß die Felge (2) an ihrer radialen Innenseite mit einer Bremsfläche (7) versehen ist.

Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 202 026 (FAREY)<br>* Seite 9, Zeilen 6-17; Seite 9, Zeile 24 - Seite 10, Zeile 5; Figur 3 * | 1,3,6 | B 60 B 21/02<br>A 61 G 5/10 |
| A | --- | 2 | |
| X | US-A-2 938 738 (LA RUE)<br>* Spalte 1, Zeile 60 - Spalte 2, Zeile 32; Figur 2 *<br>--- | 1,3,6 | |
| X | GB-A- 856 490 (HUGHES)<br>* Seite 1, Zeilen 43-68; Figuren 1-6 *<br>--- | 1,6 | |
| X | US-A-4 593 929 (WILLIAMS)<br>* Spalte 10, Zeile 65 - Spalte 11, Zeile 48; Spalte 26, Zeilen 11-17; Figuren 34,66 *<br>--- | 1,6 | |
| A | DE-A-3 314 416 (VESSA)<br>* Seite 6, Zeilen 16-19; Figur 1 *<br>--- | 1 | |
| A | US-A-3 623 748 (HAYNES)<br>* Spalte 1, Zeilen 69-71; Figur 5 *<br>----- | 1 | RECHERCHIERTE SACHGEBIETE (Int. Cl.5)<br><br>B 60 B<br>A 61 G |

Der vorliegende Recherchenbericht wurde für alle Patentansprüche erstellt

| Recherchenort | Abschlußdatum der Recherche | Prüfer |
|---|---|---|
| DEN HAAG | 11-01-1990 | AYITER I. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
·E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)